# EUROPEAN PATENT SPECIFICATION

(11) **EP 1 731 747 B1**
(45) Date of publication and mention of the grant of the patent: **04.08.2010**
(21) Application number: 05253603.4
(22) Date of filing: 10.06.2005
(51) Int. Cl.: F02K 1/34, F02K 1/38, F02K 1/44, F02K 1/46, F02K 1/48

(54) **Jet exhaust noise reduction system and method**
Vorrichtung und Methode zur Reduktion des Luftstrahlaustrittslärms
Dispositif et méthode de réduction des bruits d'échappement du jet d'air

(43) Date of publication of application: 13.12.2006
(73) Proprietor: United Technologies Corporation, Hartford, CT 06101 (US)
(72) Inventor: Schlinker, Robert, Canton, CT 06019 (US); Naravanan, Satish, Ellington, CT 06029 (US); Lord, Wesley K., South Glastonbury, CT 06073 (US); Kohlenberg, Gregory A., Meriden CT 06450 (US); Reba, Ramons, South Windsor, CT 06074 (US); Simonich, John, Glastonbury, CT 06033 (US); Soteriou, Marios C., Middletown, CT 06457 (US); Maeder, Thierry, 80805 Munich (DE)
(74) Representative: Leckey, David Herbert

(56) References cited:
- GB-A- 2 372 780
- US-A- 3 568 792
- US-A1- 2002 073 690
- US-A1- 2003 115 852

## Description

### BACKGROUND OF THE INVENTION

### 1. Field of the Invention

Embodiments of the invention are generally directed to gas turbine engine noise reduction and, more particularly, to a tandem system including an internal mixer and an exhaust nozzle modification, and an associated method, for effective flow stream mixing to reduce jet noise emission.

### 2. Description of Related Art

The generation of noise from turbulent jet exhaust is the dominant component of jet engine noise during aircraft takeoff. This noise presents public and environmental concerns and the reduction of jet noise emission continues to be a challenging problem.

Jet exhaust noise is created by the turbulent mixing of high velocity engine gases that emanate from the rear of a modern gas turbine. In large measure, it is the shearing forces between the high-velocity exhaust gases and the ambient air that produce the significant noise emission. Generally speaking, the jet noise generated by turbo fan engines is normally dominated by two sources: the fan or bypass flow and the primary or core flow. These two sources are concentric components that flow in axial streams out of the engine exhaust nozzle (tailpipe) to produce useful thrust.

Historically, engine designers have achieved jet noise reduction by decreasing engine exhaust velocities. This has led to passive approaches for reducing the peak velocity and temperature of exhaust plumes. For example, a lobe mixer concept has been used for long ducted, common flow exhaust systems for low bypass ratio engines such as those of the Pratt & Whitney JT8D engine family. Examples of lobe mixer systems and methods for turbine engine noise reduction are taught in US Patent Nos. 5,775,095 and 5,638,675, The '675 patent, for example, discloses a lobe mixer for a gas turbine engine that includes axially and radially extending chutes. The chutes act as gas conduits whereby relatively cool, low velocity fan air is directed into the chutes and in turn into the hot, higher velocity core gas flow. The lobe mixer thus increases the mixing of the core and fan bypass gases. The mixing reduces the internal flow/temperature gradients and the peak exhaust jet temperature and velocity. The flow undergoing mixing, as a result of the strong streamwise vorticity shed in the wake of the lobe mixer, evolves inside an extended tail pipe and exits from the tail pipe into the ambient environment. The reduced mixed velocity and temperature of the resulting exhaust results in a significant jet noise reduction.

In addition to the mixer concepts typical of common flow exhaust systems of low bypass ratio engines, noise reduction improvements have also been made to separate flow exhaust systems that are typical of moderate and high bypass ratio engine exhaust. These improvements have taken the form of tab-like projections or chevrons extending from the aft end of the tail pipe or exhaust nozzle. The teaching of these systems and methods can be found, for example, in US Patent Nos. 6,314,721 and 6,360,528. The tabs or chevrons described therein are essentially geometric cutouts of the exhaust nozzle circumferential aft edge, such that triangular, trapezoidal, or other shaped tabs are distributed around the perimeter of the aft end of the nozzle. The spacing, periodicity, continuity, size, and shape of the tabs can vary as disclosed in the literature, along with the varying degree of inward or outward radial penetration of the tabs into the exhaust flow. These techniques, while creating a vorticity field downstream of the tab, lack any structure to create bypass flow streamwise vorticity for interaction farther upstream. US Patent No. 6,640,537 teaches an exhaust shroud having multiple perforations and a tab-like trailing circumferential edge. The patent suggests that the exhaust shroud of the invention is applicable to a long cowl nacelle of a gas turbine engine that has a mixer device for mixing the combustion gases and the bypass airflow within the nacelle structure to improve thrust and reduce gas jet noise level. The present inventors have discovered, however, that the mere combination of internal mixer and external exhaust shroud modifications, without proper consideration of their relative placement and orientation may actually increase jet exhaust noise.

GB 2,372,780 describes a gas turbine engine nozzle with noise reducing tabs. US 3,568,792 describes a sound-suppressing nozzle having lobes and spikes. US 2002/ 0073690 describes an exhaust shroud having an irregular trailing edge with a plurality of tooth-like elements.

### SUMMARY OF THE INVENTION

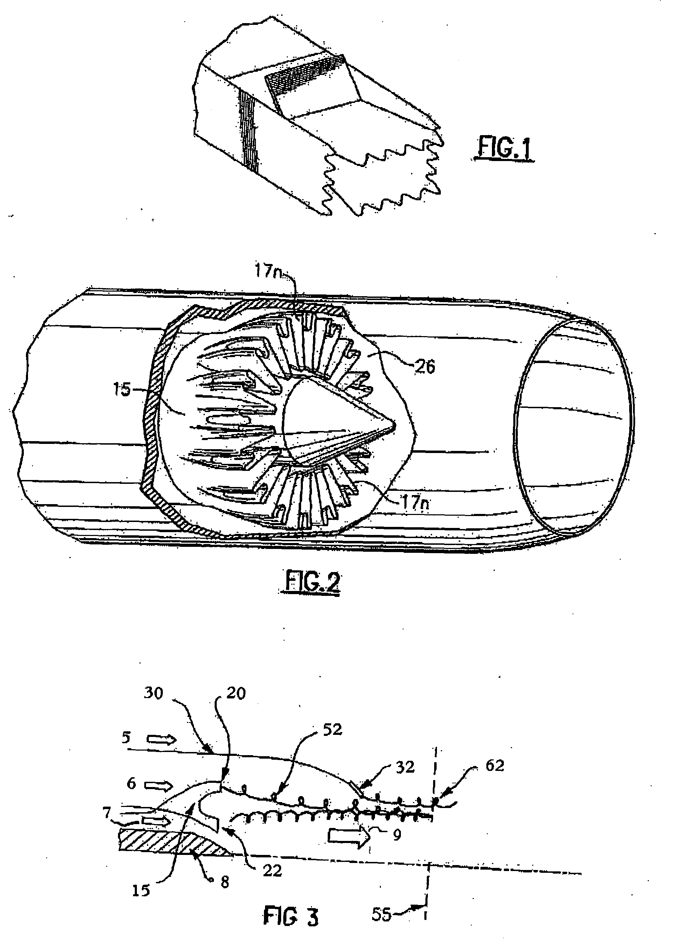

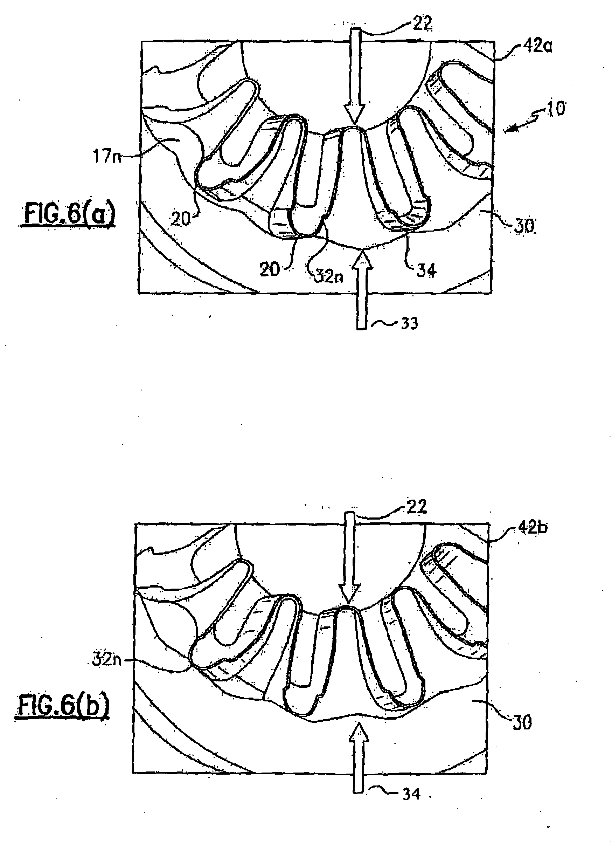

According to the present invention there are provided systems for reducing jet noise emission from an internally mixed gas turbine engine as claimed in claims 1 and 2. The system, in one embodiment, includes the basic components of a gas turbine engine including, but not limited to, a fan having a plurality of rotor blades, a low-pressure compressor, a high-pressure compressor, a combustor, a high-pressure turbine, and a low-pressure turbine. A portion of the nacelle surrounding and partially enclosing the engine components at the downstream end will be referred to hereinafter as the engine exhaust nozzle. Various nozzle geometries are contemplated as being within the scope of the invention described herein, including, but not limited to, two dimensional exhaust tail pipes (*see, e*.*g*., Fig. 1), circularly symmetric tail pipes (and mixers) (*see, e*.*g*., Fig. 2), and other shapes or geometries known in the art. The embodiments of the invention particularly pertain to the combination of an internal fan/core flow mixer in operational engagement with a nozzle having a selectively, geometrically altered, peripheral aft end. The selective alteration of the nozzle relates to the size, shape, number, and orientation of the nozzle alteration and, particularly, to the clocking relationship (i.e., alignment) of the nozzle tabs with respect to the geometry of the mixer located upstream from the nozzle exit. The mixer is a lobe mixer having a periodic plurality of mixing structures referred to herein as lobes. The lobes create a mixed fan/core flow streamwise vorticity with a specific clockwise or counter clockwise flow rotation direction from each lobe. Standard lobe mixers have between 6 to 24 lobes, each characterized by a lobe major peak (with a chute extending radially farthest into the fan stream, as illustrated, e.g., in Fig. 6) and a lobe major valley (with a chute extending radially inward the most). In one embodiment, the lobe mixer is a double lobe mixer wherein each lobe major peak has a minor peak and a minor valley. The nozzle modification takes the form of a plurality of tabs that form the aft end circumferential edge of the nozzle after cutting out or otherwise reshaping the aft end of the nozzle. The farthest downstream portion of the tab is defined as the tab tip, and the farthest upstream portion at which the air can begin to exit the nozzle is known as the tab base. The tabs (as they will be referred to hereinafter) create a streamwise vorticity of the engine exhaust flow and also impart a rotation direction to the exhaust flow vorticies. The structures and corresponding flow streams are schematically illustrated in side view in Fig. 3 for clarity. Fig. 3 shows a common nozzle/tailpipe 30, ambient/flight stream 5, fan stream 6; core stream 7, fan-core mixer 15, plug 8, mixer lobe valley 22, mixer lobe peak 20, tab 32, lobe generated vorticity 52, tab generated vorticity 62 and mixed flow containing vorticity 9. In one embodiment, the mixer lobes are contiguous and an equal number of corresponding nozzle tabs are also contiguous. The predetermined clocking relationship between the nozzle tabs and the mixer lobes provides that the alignment of the plurality of mixer lobes and the plurality of nozzle tabs is 0°, 360° or 180° where 0° and 360° represent a tab tip to lobe peak alignment and 180° represents a tab tip to lobe valley alignment. In one embodiment, a tip or tip edge center of each tab is aligned with a corresponding lobe major peak of the mixer. Alternatively, the tip or tip edge center of each tab may be aligned with a corresponding lobe major valley of the mixer. In another alternative embodiment, the tip or tip edge center of each tab may be aligned with a corresponding minor valley of each double lobe of a mixer. In another embodiment, the tip or tip edge center of each tab may be aligned with a corresponding major valley of each double lobe mixer. According to embodiments, the nozzles tabs may protrude radially inward or radially outward within a predetermined range, and/or the mixer lobes penetrate radially inward with respect to the tab tips so that the vorticity introduced by the tabs is at a sufficient distance from the bypass flow vorticity in a nozzle exit plane.

According to the invention there are provided methods for reducing jet noise emission from an internally mixed gas turbine engine as claimed in claims 12 and 13.

### Brief Description of the Drawings

Fig. 1 is a schematic representation of a two-dimensional exhaust nozzle having a modified aft end as is known in the art;
Fig. 2 is a view of the aft end of a turbo fan engine partly broken away, and showing a perspective view of a double lobe mixer as known in the art;
Fig. 3 is a cross-sectional line drawing of a system according to an embodiment of the invention to aid in the understanding of terminology used herein;
Fig. 4(a) is a photographic perspective view of a tandem system according to an embodiment of the invention, showing an internal double lobe mixer;
Fig. 4(b) is a photographic end view of the tandem exhaust system with tabs on tailpipe and double lobe mixer illustrated in Fig. 4(a);
Fig. 5 is a 3D view of a jet turbine engine showing an internal single lobe mixer as known in the art;
Fig. 6(a) is a photographic end view of a portion of a conventional single lobe mixer and exhaust nozzle configuration illustrating a clocking relationship according to an embodiment of the invention;
Fig. 6(b) shows an alternative clocking relationship of the tandem system of Fig. 6(a);
Fig. 7(a) is a schematic of a portion of the mixer "unwrapped" showing a crown (peak) flow and a valley flow and the resulting streamwise vorticity (or mixing flow structure) from a mixer lobe;
Fig. 7(b) is a photo reproduction of a mixer tested in a water tunnel with dye injected into the fan and core stream to show the swirling flow created by the vorticity, leading to mixing of the two streams;
Fig. 8 is a schematic view of an exhaust flow field displaying a section of the fancore mixer lobes, with the streamwise vortex structure sign and location, and the downstream exemplary exhaust nozzle exit geometry with the associated streamwise vortex structure sign and location, according to an embodiment of the invention;
Fig. 9 is an axial side view, partly in section, of a portion of an engine exhaust nozzle modified with a tab geometry as is known in the art;
Fig. 10 is a schematic diagram illustrating an exhaust plane downstream of the exit and circumferential distribution of the mixed flow and core flow vorticity fields according to an embodiment of the invention;
Fig. 11 is a side elevation view through one of the tabs illustrated in Fig. 9 illustrating the radial protrusion of the tab;
Figs. 12(a-c) are schematic illustrations used to demonstrate the effects of radial protrusion of tabs relative to varying amounts(small, intermediate and large) of lobe mixer radial penetration;
Fig. 13(a) is a schematic end view looking inward of a tandem mixer/nozzle clocking configuration according to an embodiment of the invention;
Fig. 13(b) is a graphical comparison of noise levels as a function of frequency for a 12-lobe/tab system according to an exemplary embodiment of the invention;
Fig. 13(c) is a view similar to that of Fig. 13(a) showing an alternative clocking arrangement;
Fig. 13(d) is a graphical representation similar to Fig. 13(b) for a 16-lobe/tab system according to an exemplary embodiment of the invention;
Fig. 14(a) is a photographic view of a double lobe mixer/nozzle system having an exemplary clocking relationship according to an embodiment of the invention;
Fig. 14(b) shows an alternative clocking relationship of the tandem system shown in Fig. 14(a);
Figs. 15(a-c) are figures similar to Figs. 13(a-c) for a double lobe mixer according to an embodiment of the invention;

### Detailed Description of a Preferred Embodiment of the Invention

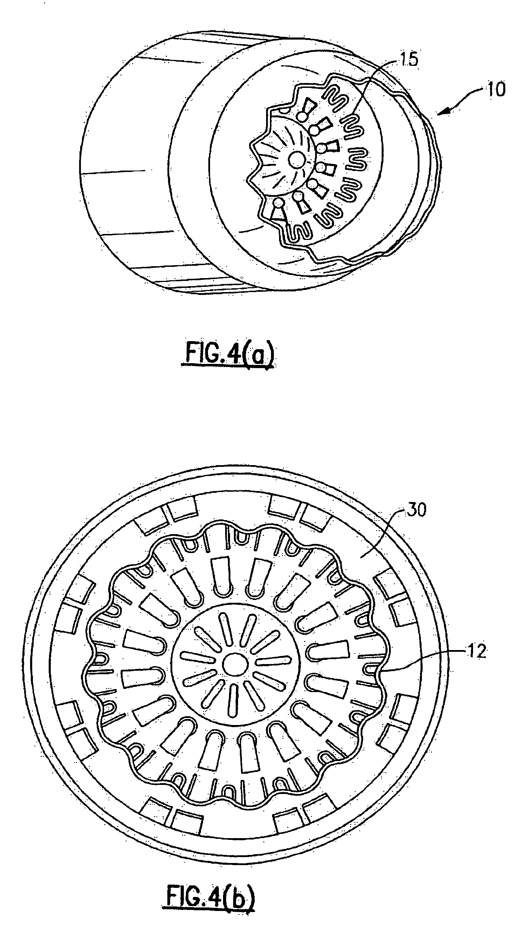

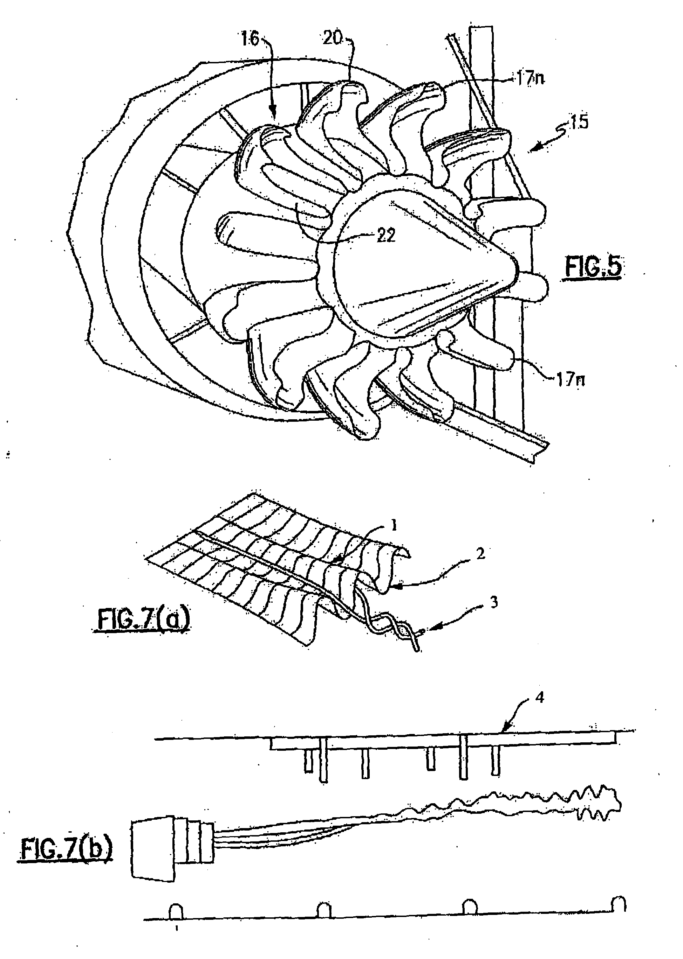

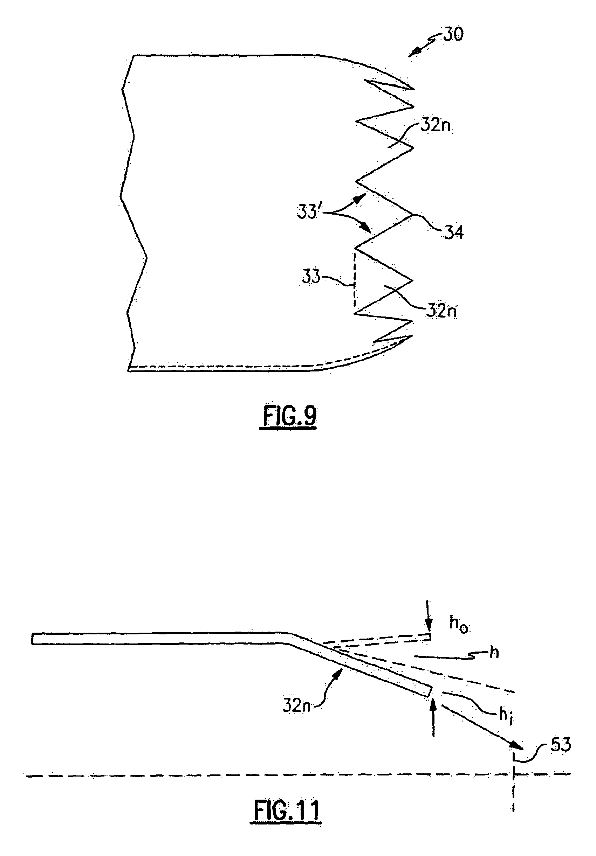

An embodiment of the invention is directed to a system 10 for reducing jet noise emission from an internally mixed gas turbine engine exhaust as illustrated by the photocopy views shown in Figs. 4(a) and 4(b). The system includes a fan/core flow mixer 15 having a periodically configured series of mixer lobes 17ₙ each having a major peak 20 and a major valley 22, as illustrated in Fig. 5 for a conventional single-lobe mixer 16, and for a double-lobe mixer 26 as illustrated in Fig. 2. The mixer 15 is in operational combination with a common flow nozzle 30 whose aft end circumferential edge 12 has been geometrically modified as shown in Fig. 4(a) and Fig. 9. With reference to Fig. 9, the geometrical modification is in the form of a series of tabs 32ₙ each having a base region 33 (encompassing a tab base) and a tip end 34. According to the embodiment, the number of mixer lobes 17ₙ is equal to the number of nozzle tabs 32ₙ and there is a predetermined clocking relationship between each of the mixer lobes 17ₙ and each of a respective nozzle tab 32ₙ. The term "clocking relationship" as used herein refers to the alignment of an identified point of a corresponding tab nozzle (e.g., tab tip or tab base) with an identified point of the lobed mixer (e.g., lobe major peak, lobe major valley, lobe minor peak, lobe minor valley, etc.) as will be further described below. The particular clocking relationship, as opposed to a random mixer/exhaust tab orientation, has been shown to reduce noise emission levels as will be further illustrated below.

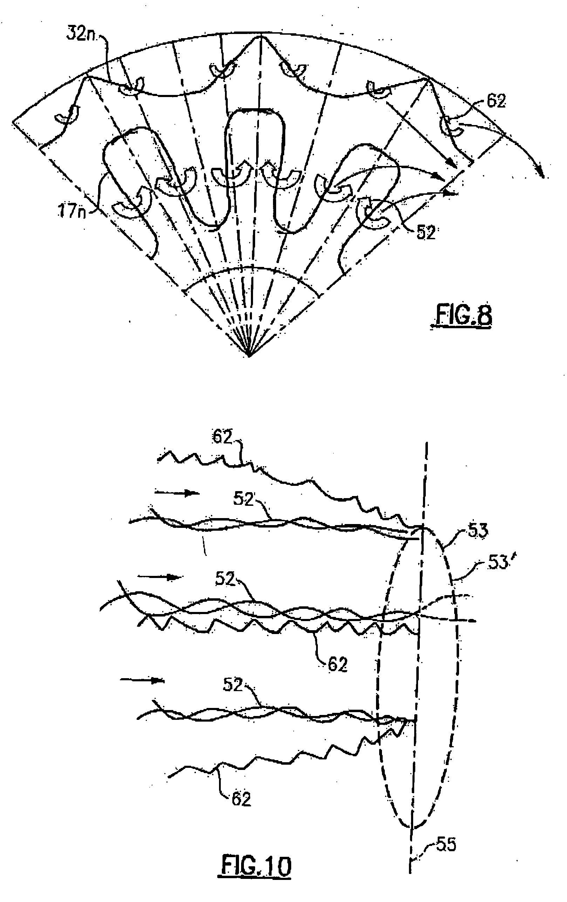

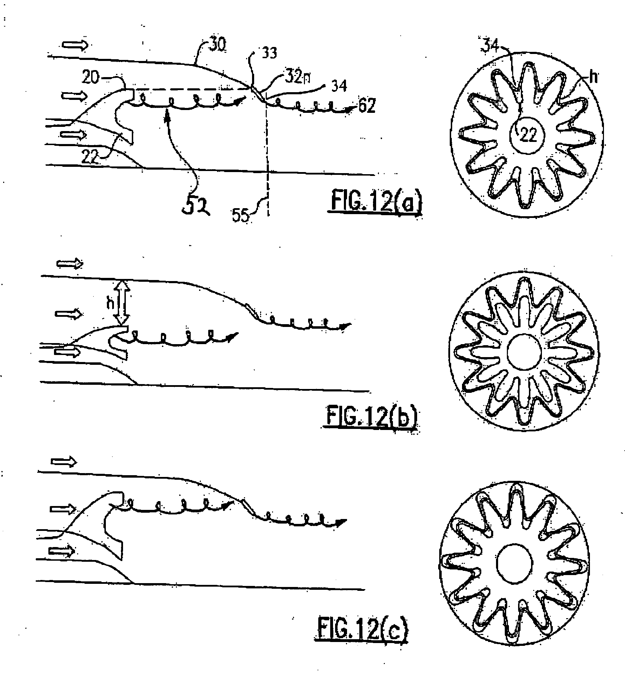

Exemplary embodiments according to the invention will be described with respect to circularly symmetric single-lobe and double-lobe mixers and corresponding circularly symmetric exhaust nozzles; however, the invention is not limited to circular geometries as will be appreciated by a person skilled in the art. Typical lobe mixers have between 6 to 24 lobes. Illustrative embodiments of the invention will refer to 12 lobe and 16 lobe mixers. As illustrated in Figs. 5 and 6, for a conventional single-lobe mixer, each of the mixer lobes 17ₙ has a major peak 20 and major valley 22. As is known, the function of the mixer is to create a vorticity field (having embedded vortices with swirling flows) by combining the fan bypass flow field with the core stream flow field as illustrated in Fig. 7(a,b). Similarly, each nozzle tab 32ₙ protruding from the aft end of the exhaust nozzle 30 introduces streamwise vorticity in the engine exhaust flow 62 as illustrated in Fig. 3. Fig. 7(a) shows a crown line 1, a valley line 2 and voriticity (swirling flow) 3, and Fig. 7(b) shows a water tunnel 4. Fig. 8 schematically illustrates an exhaust flow field in a plane showing the counter rotating streamwise vortex pairs 52 generated by the mixer lobes and the counter rotating streamwise vortex pairs 62 generated by the exhaust nozzle tabs. Fig. 8 shows flow exiting out of the plane. Based upon the size, shape, radial lobe penetration, and other parameters of the mixer, the mixed flow 52 will have a circumferential distribution 53 at a measurable plane location 55 downstream of the exhaust exit, as illustrated in Fig. 10. Likewise, the nozzle tabs 32 will also produce a circumferentially distributed vorticity 53' at a plane 55 downstream of the exit. The size and location of the tab-induced vorticity distribution 53' can be controlled by appropriately shaping, sizing and radially orienting the nozzle tabs such that the circumferential distribution of the tab-induced vorticity 53' is substantially the same as the circumferential distribution of the internal mixed flow vorticity 53, in the plane 55 of the exhaust. As shown in Fig. 11, each of the tabs 32ₙ can be made to protrude over a radial range, h, between a radially outward pointing direction, hₒ, and a radially inward pointing direction, hᵢ. In an exemplary aspect, the tabs 32ₙ protrude radially inward to align the tab-induced vorticity distribution with the mixed flow vorticity distribution in the exit plane 53 as described above. The size and location of the vorticity distribution at 53' can also be controlled by appropriate radial protrusions of the mixer lobes such that the radial location of the mixer lobe vorticity reaching 55 matches the radial location of the tab induced vorticity for their effective coupling. As shown in Fig. 12, each of the lobes (20) can be made to protrude over a radial range, h. In an exemplary aspect, the lobes protrude radially in an intermediate location to align the lobe vorticity distribution with the tab-induced vorticity distribution in the exit plane 53. Fig. 12(a-c) schematically illustrates the relationships between the mixer radial height parameter and the nozzle tab protrusion. In Fig. 12(a), each of the lobe peaks 20 are aligned with a corresponding tab base 34, and the mixer lobe major peak 20 has an intermediate penetration into the mixed flow stream for desired radial alignment of the mixed flow vorticity distribution and the tab nozzle vorticity distribution. Intermediate fan-core mixer lobe penetration enables effective coupling of lobe and tab mixing structures. Figs. 12(b, c), respectively, illustrate a too small fan-core mixer lobe penetration resulting in an ineffective coupling of lobe and tab structures, and a too large fan-core mixer lobe penetration that negatively impacts coupling of the lobe and tab vortices.

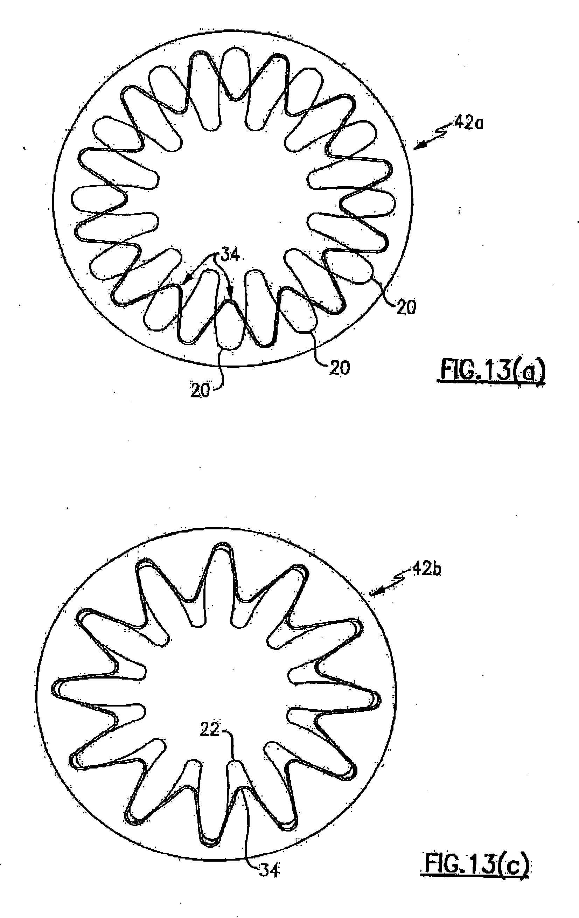

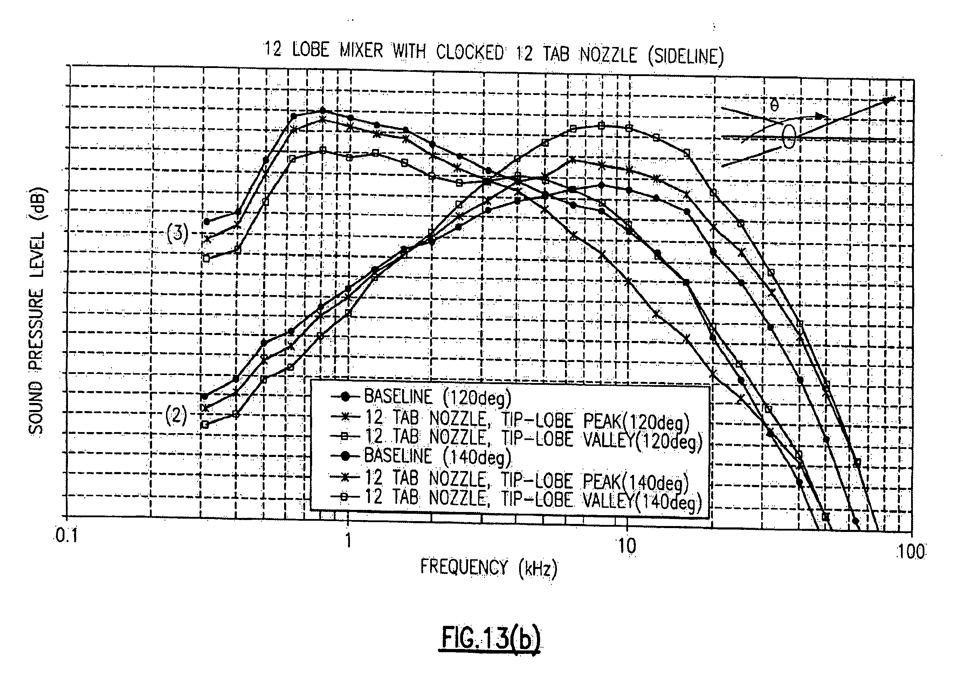

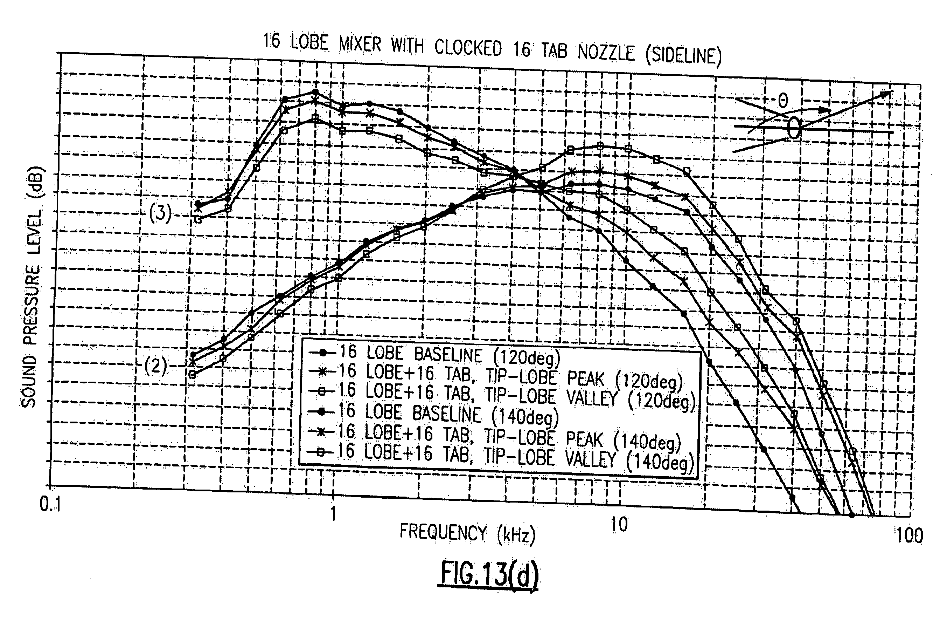

An exemplary embodiment according to the invention will now be described with reference to Figs. 6 and 13. Fig 6(a) shows a portion of a tandem conventional 12 lobe single-lobe mixer and nozzle tab configuration in a particular clocking relationship. Fig. 6(a) also indicates a tab base 33, Each of the tab tips 34 is aligned with a corresponding lobe major peak 20 (note that due to the close-up view, the described tab tip to lobe peak clocking relationship is apparent only at one tab-lobe pair). This tab tip to lobe peak clocking relationship is also shown in a schematic end view in Fig. 13(a) (clocking view 42(a)). In an alternative aspect of the exemplary embodiment, illustrated in Figs. 6(b) and 13(c), a different clocking relationship 42(b) is illustrated in which each tab tip 34 is aligned with a lobe major valley 22. The two clocking relationships 42(a) (tab tip to lobe peak) and 42(b) (tab tip to lobe valley) may be thought of for illustration purposes in terms of a phase relationship of 0 degrees or 360 degrees for the tab tip to lobe peak case, and 180 degrees for the tab tip to lobe valley case.

Figure 13(b) shows two sets of graphs (2,3) of measured far field sound pressure level in decibels (dB) as a function of frequency for a tandem system consisting of a 12-lobe mixer with a 12 tab nozzle according to an embodiment of the invention. Measurement data was generated under scale model acoustic testing conditions wherein microphone arrays were positioned at various locations around the exhaust system. The set of graphs represented by (2) and (3) of Fig. 13(b) show baseline data, tab tip to lobe peak clocking relationship data, and tab tip to lobe valley clocking relationship data for microphones placed at the 120 degree and 140 degree positions, respectively, as measured according to the angle θ in the insert of the upper right corner of Fig. 13(d). Here θ is measured from the upstream inlet axis of the engine. The data illustrate varying amounts of noise reduction in the lower frequency range of the exhaust noise emission, with the best-measured results obtained with the clocking relationship 42(b); i.e., tab tips 34 aligned with lobe major valleys 22. Fig. 13(d) is a graph similar to that of Fig. 13(b) for a 16-lobe single-lobe mixer-nozzle tab tandem system according to an embodiment of the invention.

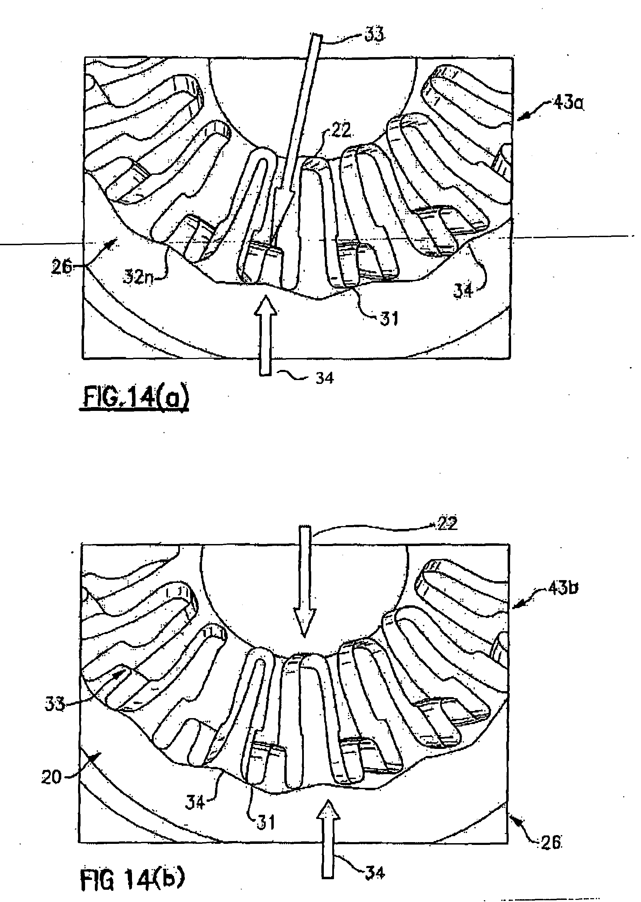

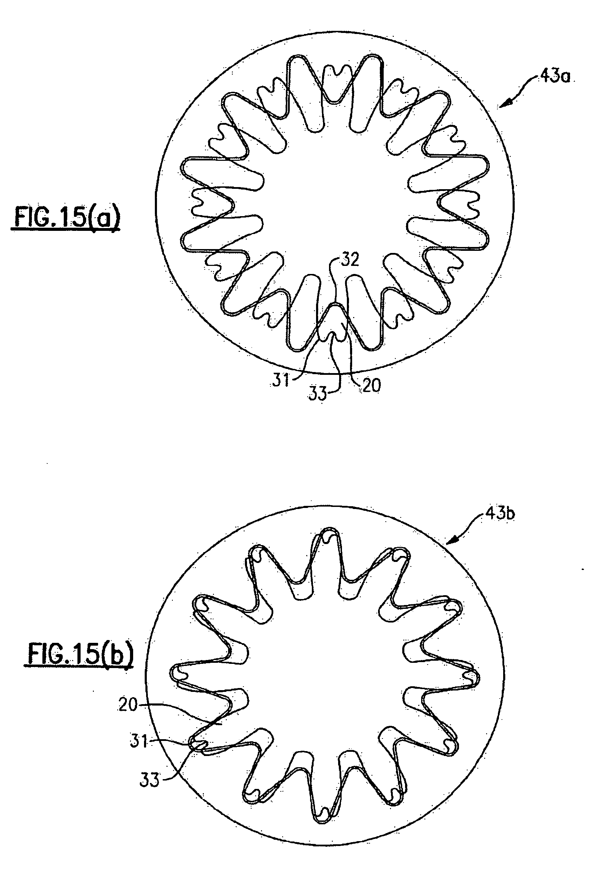

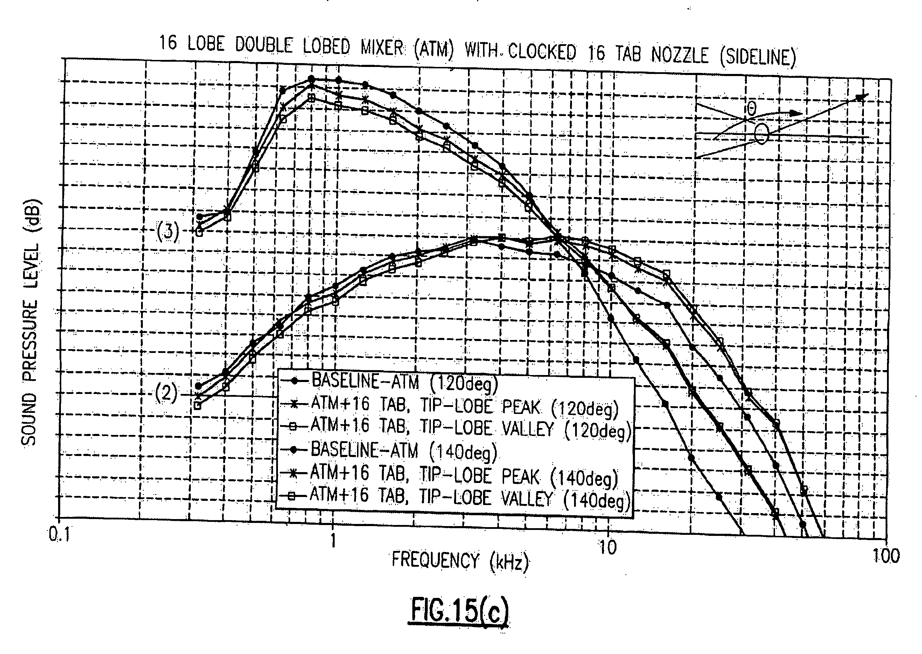

Another exemplary embodiment is illustrated with reference to Figs. 14 and 15 wherein the mixer 26 is a 16-lobe double-lobe mixer. In the double-lobe mixer, each primary lobe has a major valley 22 as in the single-lobe mixer, but each major peak now has a minor valley 33 with adjacent minor peaks 31 as illustrated in Figs. 14(a) and (b). In Fig. 14(a), each tab tip 34 is aligned with a lobe minor valley 33, illustrating clocking relationship 43(a). Alternatively, clocking relationship 43(b) is illustrated in Fig. 14(b) in which each tab tip 34 is aligned with a lobe major valley 22. These clocking relationships are further schematically illustrated in Figs. 15(a) and (b), respectively. Fig. 15(c) is a graphical representation of sound level as a function of frequency similar to those of Figs.13(b) and (d). The measured data indicates that the best noise reduction performance was obtained with the clocking relationship 43(b) in which each tab tip 34 was aligned with a corresponding lobe major valley 22. In terms of a standardized measurement metric known in the art as the effective perceived noise level (EPNL), the exemplary clocking relationships using tab tip-lobe major valley alignment resulted in increased EPNL noise reduction of 1.8 dB compared to about 1.5 dB (for tab tip-lobe major peak alignment configuration). Similarly, upon using a tandem system comprising a conventional 12-lobe mixer with 12-tab nozzle, EPNL noise reduction of 0.3 dB was obtained for the tab tip -lobe major valley alignment configuration, in contrast to 0-0.2 dB increase for the tab tip- lobe major peak alignment case.

According to an embodiment of the invention, jet exhaust noise is reduced by matching a circumferential distribution of tab nozzle induced vorticity fields with the circumferential distribution of mixer-induced vorticity fields, particularly in a common exhaust exit plane. The flow field distributions are achieved, respectively, by a tandem system including an internal lobed mixer and a geometrically altered exhaust nozzle aft end in the form of axially protruding tabs when a particular clocking relationship between the tab tips and the mixer lobes is provided. The tab parameters are selected in relation to the number and alignment of the plurality of mixing structures of the mixer such that the direction of rotation of the nozzle induced tab nozzle streamwise vorticity either substantially matches or opposes the direction of rotation of the mixer induced streamwise vorticity at a given circumferential location in an exit plane of the nozzle exhaust. Accordingly, the mixer induced-streamwise vorticity and the tab nozzle-induced streamwise vorticity are aligned in circumferential location in a desired exit plane location of the tail pipe. The method of specifically clocking nozzle tab alignment with mixer lobe structures has demonstrated measurable noise emission reduction according to an industry standard metric. The effectiveness of coupling of the mixer induced and tab nozzle induced streamwise clocking also requires an intermediate radial location for the mixer lobe protrusion to ensure that the two vorticity fields couple at the same radial location downstream of the nozzle exist plane.

The foregoing embodiments of the invention are disclosed herein by way of examples only and are not intended to limit the scope of the present invention, which is solely defined by the appended claims. A person of ordinary skill in the art will appreciate many variations and modifications within the scope of this invention.

## Claims

1. A system for reducing jet noise emission from an internally mixed gas turbine engine exhaust, comprising:
a fan/core flow mixer (15) having a plurality of mixer lobes (17) each having a major peak (20) and a major valley (22); and
a common flow nozzle (30) having a plurality of tabs (32) each having a base end (33) and a tip (34) or tip edge center end, located along a circumferential edge of an aft end of the nozzle (30); **characterised by**
a predetermined clocking relationship between the plurality of mixer lobes (17) and the plurality of tabs (32), wherein the predetermined clocking relationship provides that each of the mixer lobe major peaks (20) is axially aligned with a respective tab tip (34).

2. A system for reducing jet noise emission from an internally mixed gas turbine engine exhaust, comprising:
a fan/core flow mixer (15) having a plurality of mixer lobes (17) each having a major peak (20) and a major valley (22); and
a common flow nozzle (30) having a plurality of tabs (32) each having a base end (33) and a tip (34) or tip edge center end, located along a circumferential edge of an aft end of the nozzle (30); **characterised by**
a predetermined clocking relationship between the plurality of mixer lobes (17) and the plurality of tabs (32), wherein the predetermined clocking relationship provides that each of the mixer lobe major valleys (22) is axially aligned with a respective tab tip (34).

3. The system of claim 1 or 2, wherein the fan/core flow mixer (15) is a conventional lobe mixer.

4. The system of claim 3, wherein the fan/core flow mixer (15) has a mixer lobe count in the range between 6 to 24 mixer lobes.

5. The system of claim 1 or 2, wherein the fan/core flow mixer (15) is a double-lobe mixer, wherein each mixer lobe major peak (20) includes a minor peak (31) and a minor valley (33).

6. The system of claim 5, wherein the tip (34) of each tab (32) is axially aligned with the minor valley (33) of each respective mixer lobe major peak (20).

7. The system of claim 5 or 6, wherein the double-lobe mixer (15) has a mixer lobe count in the range between 6 to 24 mixer lobes.

8. The system of any preceding claim, wherein each of the plurality of mixer lobes (17) radially penetrates within a selected range relative to a radial tab protrusion.

9. The system of claim 8, wherein the fan/core flow mixer (15) produces a mixed flow (52) having a circumferential distribution (53) located in a plane (55) of the exhaust, the tab orientation being aligned with said circumferential distribution (53).

10. The system of claim 9, wherein the common flow nozzle (30) produces streamwise vorticity (62) in an external exhaust stream, further wherein the mixed flow (52) and the common flow nozzle-inducedstreamwise vorticity are aligned in circumferential location at a desired exit plane of the exhaust.

11. The system of any preceding claim, wherein each of the plurality of tabs (32) has a leading edge integral with the circumferential edge of the aft end of the common flow nozzle (30), at least two side edges (33'), and a tip edge (34), which define a shape of the tab (32), the shape being selected from one of a triangle, a trapezoid, or a shape having smooth, continuous corners, further wherein the tip edge (34) is a point, a flat edge, a curved edge, or a plurality of shaped edges.

12. A method for reducing jet noise emission from an internally mixed gas turbine engine exhaust, comprising:
providing a lobe mixer having a plurality of mixer lobes (17) as a fan/core mixer (15);
providing a selective geometric alteration of the aft end of a common flow nozzle (30), wherein said geometric alteration comprises forming a plurality of tabs (32); and
orientating at least some of the tabs (32) in a selected range between a radially inward-protruding direction and a radially outward-protruding direction; **characterised by**
clocking each one of the plurality of tabs (32) with a corresponding one of the plurality of mixer lobes (17) to align a circumferential distribution of a mixed flow vorticity field (53) produced by the fan/core mixer (15) with a circumferentially distributed exhaust flow vorticity field (53') produced by the common flow nozzle (30) at an exit plane (55) of the engine exhaust, wherein each one of the plurality of tabs (34) is axially aligned with a corresponding mixer lobe major peak (20).

13. A method for reducing jet noise emission from an internally mixed gas turbine engine exhaust, comprising:
providing a lobe mixer having a plurality of mixer lobes (17) as a fan/core mixer (15);
providing a selective geometric alteration of the aft end of a common flow nozzle (30), wherein said geometric alteration comprises forming a plurality of tabs (32); and
orientating at least some of the tabs (32) in a selected range between a radially inward-protruding direction and a radially outward-protruding direction; **characterised by**
clocking each one of the plurality of tabs (32) with a corresponding one of the plurality of mixer lobes (17) to align a circumferential distribution of a mixed flow vorticity field (53) produced by the fan/core mixer (15) with a circumferentially distributed exhaust flow vorticity field (53') produced by the common flow nozzle (30) at an exit plane (55) of the engine exhaust, wherein each one of the plurality of tabs (34) is axially aligned with a corresponding mixer lobe major valley (22).

14. The method of claim 12 or 13, wherein the lobe mixer (15) is a double-lobe mixer.

15. The method of claim 12, 13 or 14, comprising providing a plurality of tabs (32) on the common flow nozzle (30) that is equal to a plurality of major peaks (20) of the lobe mixer (15).

## Patentansprüche

1. Vorrichtung zur Reduzierung von Düsengeräuschemission eines Auslasses eines Gasturbinenantriebs mit interner Gemischbildung, umfassend:
einen Bläser/ Kernstrommischer (15), welcher eine Mehrzahl von Mischerlappungen (17) aufweist, wobei jede ein Hauptpeak (20) und ein Haupttal (22) aufweist; und
eine gemeinsame Strömungsdüse (30), welche eine Mehrzahl von Zacken (32) aufweist, wobei jede ein Basisende (33) und eine Spitze (34) oder ein Spitzenkantenzentrumsende aufweist, welches entlang einer in Umfangsrichtung umlaufenden Kante eines hinteren Endes der Düse (30) angeordnet ist; **dadurch gekennzeichnet, dass**
eine vorbestimmte Taktbeziehung zwischen der Mehrzahl von Mischerlappungen (17) und der Mehrzahl von Zacken (32) besteht, wobei die vorbestimmte Taktbeziehung sicherstellt, dass jeder der Mischerlappungshauptpeaks (20) axial mit einer jeweiligen Zackenspitze (34) ausgerichtet ist.

2. Vorrichtung zur Reduzierung von Düsengeräuschemission eines Auslasses eines Gasturbinenantriebs mit interner Gemischbildung , umfassend:
einen Bläser/ Kernstrommischer (15), welcher eine Mehrzahl von Mischerlappungen (17) aufweist, wobei jede ein Hauptpeak (20) und ein Haupttal (22) aufweist; und
eine gemeinsame Strömungsdüse (30), welche eine Mehrzahl von Zacken (32) aufweist, wobei jede ein Basisende (33) und eine Spitze (34) oder ein Spitzenkantenzentrumsende aufweist, welches entlang einer in Umfangsrichtung umlaufenden Kante eines hinteren Endes der Düse (30) angeordnet ist; **dadurch gekennzeichnet, dass**
eine vorbestimmte Taktbeziehung zwischen der Mehrzahl von Mischerlappungen (17) und der Mehrzahl von Zacken (32) besteht, wobei die vorbestimmte Taktbeziehung sicherstellt, dass jedes der Mischerlappungshaupttäler (22) axial mit einer jeweiligen Zackenspitze (34) ausgerichtet ist.

3. Vorrichtung nach Anspruch 1 oder 2, wobei der Bläser/ Kernstrommischer (15) ein konventioneller Blütenmischer bzw. ondulierter Mischer ist.

4. Vorrichtung nach Anspruch 3, wobei der Bläser/ Kernstrommischer (15) eine Mischerlappungsanzahl in dem Bereich zwischen 6 bis 24 Mischerlappungen aufweist.

5. Vorrichtung nach Anspruch 1 oder 2, wobei der Bläser/ Kernstrommischer (15) ein doppelt ondulierter Mischer ist, wobei jeder Mischerlappungshauptpeak (20) einen Nebenpeak (31) und ein Nebental (33) beinhaltet.

6. Vorrichtung nach Anspruch 5, wobei die Spitze (34) von jedem Zacken (32) axial mit dem Nebental (33) eines jeden entsprechenden Mischerlappungshauptpeaks (20) ausgerichtet ist.

7. Vorrichtung nach nach Anspruch 5 oder 6, wobei der doppelt ondulierte Mischer (15) eine Mischerlappungsanzahl in dem Bereich zwischen 6 bis 24 Mischerlappungen aufweist.

8. Vorrichtung nach einem der vorangehenden Ansprüche, wobei jede der Mehrzahl von Mischerlappungen (17) radial in einen ausgewählten Bereich relativ zu einem radialen Zackenüberstand vordringt.

9. Vorrichtung nach Anspruch 8, wobei der Bläser/ Kernstrommischer (15) einen Mischstrom (52) erzeugt, welcher eine Umfangsverteilung (53) aufweist, welche in einer Ebene (55) des Auslasses angeordnet ist, wobei die Zackenorientierung mit der Umfangsverteilung (53) ausgerichtet ist.

10. Vorrichtung nach Anspruch 9, wobei die gemeinsame Strömungsdüse (30) eine in Strömungsrichtung verlaufende Verwirbelung (62) in einem externen Ausslassstrom erzeugt, wobei des Weiteren der Mischstrom (52) und die von der gemeinsamen Strömungsdüse induzierte in Strömungsrichtung verlaufende Verwirbelung an einer gewünschten Austrittsebene des Auslasses am Umfangsort gleichgerichtet sind.

11. Vorrichtung nach einem der vorangehenden Ansprüche, wobei jede der Mehrzahl von Zacken (32) eine Vorderkante, welche integral mit der in Umfangsrichtung verlaufenden Kante des hinteres Endes der gemeinsamen Strömungsdüse (30) angeordnet ist, zumindest zwei Seitenkanten (33'), und eine Spitzenkante (34) aufweist, welche eine Form der Zacke (32) definieren, wobei die Form ausgewählt ist aus einem aus einem Dreieck, einem Trapez, oder einer Form, welche weiche kontinuierliche Ecken aufweist, wobei des Weiteren die Spitzenkante (34) ein Punkt, eine flache Kante, eine gekrümmte Kante oder eine Mehrzahl von geformten Kanten ist.

12. Verfahren zur Reduzierung von Düsengeräuschemission eines Auslasses eines Gasturbinenantriebs mit interner Gemischbildung, umfassend:
Bereitstellen eines Lappungsmischers, welcher eine Mehrzahl von Mischerlappungen (17) aufweist, als ein Bläser/ Kernmischer (15);
Bereitstellen einer ausgewählten geometrischen Änderung des hinteren Endes einer gemeinsamen Strömungsdüse (30), wobei die geometrische Änderung das Ausbilden einer Mehrzahl von Zacken (32) umfasst; und
Orientieren zumindest einiger der Zacken (32) in einem ausgewählten Bereich zwischen einer radial nach innen hervorstehenden Richtung und einer radial nach außen hervorstehenden Richtung;
**dadurch gekennzeichnet, dass**
jede der Mehrzahl von Zacken (32) mit einer entsprechenden der Mehrzahl von Mischerlappungen (17) in einen Takt gebracht werden, um eine Umfangsverteilung eines Mischstromverwirbelungsfeldes (53), welches von einem Bläser/ Kernmischer (15) erzeugt wird, mit einem in Umfangsrichtung verteilten Auslassstromverwirbelungsfeld (53'), welches von der gemeinsamen Strömungsdüse (30) in einer Auslassebene (55) des Antriebsauslasses erzeugt wird, gleichzurichten, wobei jede der Mehrzahl von Zacken (34) axial mit einem jeweiligen Mischerlappungshauptpeak (20) ausgerichtet ist.

13. Verfahren zur Reduzierung von Düsengeräuschemission eines Auslasses eines Gasturbinenantriebs mit interner Gemischbildung, umfassend:
Bereitstellen eines Lappungsmischers, welcher eine Mehrzahl von Mischerlappungen (17) aufweist, als ein Bläser/ Kernmischer (15);
Bereitstellen einer ausgewählten geometrischen Änderung des hinteren Endes einer gemeinsamen Strömungsdüse (30), wobei die geometrische Änderung das Ausbilden einer Mehrzahl von Zacken (32) umfasst; und
Orientieren zumindest einiger der Zacken (32) in einem ausgewählten Bereich zwischen einer radial nach innen hervorstehenden Richtung und einer radial nach außen hervorstehenden Richtung;
**dadurch gekennzeichnet, dass**
jede der Mehrzahl von Zacken (32) mit einer jeweiligen der Mehrzahl von Mischerlappungen (17) in einen Takt gebracht werden, um eine Umfangsverteilung eines Mischstromverwirbelungsfeldes (53), welches von einem Bläser/ Kernmischer (15) erzeugt wird, mit einem in Umfangsrichtung verteilten Auslassstromverwirbelungsfeld (53'), welches von der gemeinsamen Strömungsdüse (30) in einer Auslassebene (55) des Antriebsauslasses erzeugt wird, gleichzurichten, wobei jede der Mehrzahl von Zacken (34) axial mit einem jeweiligen Mischerlappungshaupttal (22) ausgerichtet ist.

14. Verfahren nach Anspruch 12 oder 13, wobei der Lappungsmischer (15) ein doppelt ondulierter Mischer ist.

15. Verfahren nach Anspruch 12, 13 oder 14, umfassend:
Bereitstellen einer Mehrzahl von Zacken (32) an der gemeinsamen Strömungsdüse (30), die einer Mehrzahl von Hauptpeaks (20) des Lappungsmischers (15) entspricht.

## Revendications

1. Dispositif de réduction de l'émission de bruit du jet d'air d'un échappement de moteur à turbine à gaz mélangé intérieurement, comprenant:
un mélangeur de flux à soufflante/noyau (15) comprenant une pluralité de lobes de mélangeur (17) présentant chacun un pic majeur (20) et une vallée majeure (22); et
une tuyère d'écoulement commune (30) comportant une pluralité de languettes (32) présentant chacune une extrémité de base (33) et une pointe (34) ou une extrémité centrale de bord de pointe, située le long d'un bord circonférentiel d'une extrémité arrière de la tuyère (30),
**caractérisé par**:
une relation de synchronisation prédéterminée entre la pluralité de lobes de mélangeur (17) et la pluralité de languettes (32), dans lequel il résulte de la relation de synchronisation prédéterminée que chacun des pics majeurs de lobe de mélangeur (20) est aligné de façon axiale avec une pointe de languette respective (34).

2. Dispositif de réduction de l'émission de bruit du jet d'air d'un échappement de moteur à turbine à gaz mélangé intérieurement, comprenant:
un mélangeur de flux à soufflante/noyau (15) comprenant une pluralité de lobes de mélangeur (17) présentant chacun un pic majeur (20) et une vallée majeure (22); et
une tuyère d'écoulement commune (30) comportant une pluralité de languettes (32) présentant chacune une extrémité de base (33) et une pointe (34) ou une extrémité centrale de bord de pointe, située le long d'un bord circonférentiel d'une extrémité arrière de la tuyère (30),
**caractérisé par**:
une relation de synchronisation prédéterminée entre la pluralité de lobes de mélangeur (17) et la pluralité de languettes (32), dans lequel il résulte de la relation de synchronisation prédéterminée que chacune des vallées majeures de lobe de mélangeur (22) est alignée de façon axiale avec une pointe de languette respective (34).

3. Dispositif selon la revendication 1 ou 2, dans lequel le mélangeur de flux à soufflante/noyau (15) est un mélangeur à lobes conventionnel.

4. Dispositif selon la revendication 3, dans lequel le mélangeur de flux à soufflante/noyau (15) comprend un nombre de lobes de mélangeur qui est compris dans la gamme de 6 à 24 lobes de mélangeur.

5. Dispositif selon la revendication 1 ou 2, dans lequel le mélangeur de flux à soufflante/noyau (15) est un mélangeur à lobes doubles, dans lequel chaque pic majeur de lobe de mélangeur (20) comprend un pic mineur (31) et une vallée mineure (33).

6. Dispositif selon la revendication 5, dans lequel la pointe (34) de chaque languette (32) est alignée de façon axiale avec la vallée mineure (33) de chaque pic majeur de lobe de mélangeur respectif (20).

7. Dispositif selon la revendication 5 ou 6, dans lequel le mélangeur à lobes doubles (15) comprend un nombre de lobes de mélangeur qui est compris dans la gamme de 6 à 24 lobes de mélangeur.

8. Dispositif selon l'une quelconque des revendications précédentes, dans lequel chaque lobe de la pluralité de lobes de mélangeur (17) pénètre radialement à l'intérieur d'une portée sélectionnée par rapport à une saillie de languette radiale.

9. Dispositif selon la revendication 8, dans lequel le mélangeur de flux à soufflante/noyau (15) produit un flux mélangé (52) qui présente une distribution circonférentielle (53) située dans un plan (55) de l'échappement, l'orientation des languettes étant alignée avec ladite distribution circonférentielle (53).

10. Dispositif selon la revendication 9, dans lequel la tuyère d'écoulement commune (30) produit un tourbillonnement dans le sens du courant (62) dans le courant d'échappement externe, dans lequel en outre le flux mélangé (52) et le tourbillonnement dans le sens du courant induit par la tuyère d'écoulement commune sont alignés dans une position circonférentielle à un plan de sortie souhaité de l'échappement.

11. Dispositif selon l'une quelconque des revendications précédentes, dans lequel chaque languette de la pluralité de languettes (32) présente un bord avant qui est intégré au bord circonférentiel de l'extrémité arrière de la tuyère d'écoulement commune (30), au moins deux bords latéraux (33') et un bord de pointe (34) qui définissent une forme de la languette (32), la forme étant sélectionnée parmi un triangle, un trapèze ou une forme présentant des coins continus uniformes, dans lequel en outre le bord de pointe (34) est une pointe, un bord plat, un bord courbe ou une pluralité de bords profilés.

12. Procédé de réduction de l'émission de bruit du jet d'air d'un échappement de moteur à turbine à gaz mélangé intérieurement, comprenant les étapes suivantes:
préparer un mélangeur à lobes comprenant une pluralité de lobes de mélangeur (17) sous la forme d'un mélangeur à soufflante/noyau (15);
former une altération géométrique sélective de l'extrémité arrière d'une tuyère d'écoulement commune (30), dans lequel ladite altération géométrique comprend la formation d'une pluralité de languettes (32); et
orienter au moins certaines des languettes (32) dans une portée sélectionnée entre une direction saillant radialement vers l'intérieur et une direction saillant radialement vers l'extérieur,
**caractérisé par** l'étape consistant à:
synchroniser chaque languette de la pluralité de languettes (32) avec un lobe correspondant de la pluralité de lobes de mélangeur (17) de manière à aligner une distribution circonférentielle d'un champ de tourbillonnement de flux mélangé (53) produit par le mélangeur à soufflante/noyau (15) avec un champ de tourbillonnement de flux d'échappement distribué de façon circonférentielle (53') produit par la tuyère d'écoulement commune (30) à un plan de sortie (55) de l'échappement de moteur, dans lequel chaque languette de la pluralité de languettes (34) est alignée de façon axiale avec un pic majeur de lobe de mélangeur correspondant (20).

13. Procédé de réduction de l'émission de bruit du jet d'air d'un échappement de moteur à turbine à gaz mélangé intérieurement, comprenant les étapes suivantes:
préparer un mélangeur à lobes comprenant une pluralité de lobes de mélangeur (17) sous la forme d'un mélangeur à soufflante/noyau (15);
former une altération géométrique sélective de l'extrémité arrière d'une tuyère d'écoulement commune (30), dans lequel ladite altération géométrique comprend la formation d'une pluralité de languettes (32); et
orienter au moins certaines des languettes (32) dans une portée sélectionnée entre une direction saillant radialement vers l'intérieur et une direction saillant radialement vers l'extérieur,
**caractérisé par** l'étape consistant à:
synchroniser chaque languette de la pluralité de languettes (32) avec un lobe correspondant de la pluralité de lobes de mélangeur (17) de manière à aligner une distribution circonférentielle d'un champ de tourbillonnement de flux mélangé (53) produit par le mélangeur à soufflante/noyau (15) avec un champ de tourbillonnement de flux d'échappement distribué de façon circonférentielle (53') produit par la tuyère d'écoulement commune (30) à un plan de sortie (55) de l'échappement de moteur, dans lequel chaque languette de la pluralité de languettes (34) est alignée de façon axiale avec une vallée majeure de lobe de mélangeur correspondant (22).

14. Procédé selon la revendication 12 ou 13, dans lequel le mélangeur à lobes (15) est un mélangeur à lobes doubles.

15. Procédé selon la revendication 12, 13 ou 14, comprenant la formation d'une pluralité de languettes (32) sur la tuyère d'écoulement commune (30) qui est égale à la pluralité de pics majeurs (20) du mélangeur à lobes (15).
